# EUROPEAN PATENT APPLICATION

(11) **EP 4 439 393 A1**
(43) Date of publication of application: **02.10.2024**
(21) Application number: 24163225.6
(22) Date of filing: 13.03.2024
(51) Int. Cl.: G06N 3/08

(54) **FEATURE ENGINEERING LOGIC GENERATION AND SIMULATION**

(30) Priority: 22.03.2023 US 202318187795
(71) Applicant: eBay Inc., San Jose, CA 95125 (US)
(72) Inventor: Chen, Jianzhong, San Jose, 95125 (US); Chen, Tianyu, San Jose, 95125 (US); Chen, Zhengfei, San Jose, 95125 (US); Li, Xin, San Jose, 95125 (US); Wang, Yiheng, San Jose, 95125 (US); Wu, Zhongyuan, San Jose, 95125 (US); Yu, Yucai, San Jose, 95125 (US); Zhu, Guansheng, San Jose, 95125 (US)
(74) Representative: Müller-Boré & Partner Patentanwälte PartG mbB

(57) **Abstract**

A computing device may receive trigger data defining a trigger event and logic to add an enriched event associated with the trigger event. A computing device may detect occurrence of the trigger event in execution of one or more digital services by an executable service platform in an online operational environment of a service provider system based on the trigger data. A computing device may generate event data describing the execution of the trigger event and the enriched event responsive to the detecting based on the logic of the trigger data. A computing device may store the event data within an offline simulation environment. A computing device may simulate operation of the executable service platform offline using the event data. A computing device may output a result of the simulating for display in a user interface.

## Description

### BACKGROUND

Machine learning refers to techniques implemented by computing devices to make predictions or decisions based on data without being explicitly programmed to do so, e.g., by a user. To do so, a machine-learning model is trained using training data. A machine-learning model refers to a computer representation that can be tuned (e.g., trained and retrained) based on inputs to approximate unknown functions. In particular, the term machine-learning model can include a model that utilizes algorithms to learn from, and make predictions on, known data by analyzing training data to learn and relearn to generate outputs that reflect patterns and attributes of the training data.

Feature engineering refers to a technique used to extract events as "features" that are usable to improve efficiency and accuracy in the training, retraining, and use of a machine-learning model. An example of this is complex event processing which is usable by a computing device to detect complex event patterns in data that are usable to train and use a machine-learning model. A complex event pattern, for instance, may involve a cascading series of events that together identify occurrence of the complex event, e.g., audio data capturing a sound of raindrops hitting a roof that together indicate it is raining. Conventional techniques used to support and implement complex event processing, however, fail in real world examples in support of both online environments used by engineers in operation of corresponding digital services and offline environments used by data scientists for feature engineering.

### SUMMARY

Feature engineering logic generation and simulation techniques are described. These techniques support automated logic generation (e.g., as part of a domain specific language) to define cascading-based complex event processing variables as part of feature engineering that support unified implementation across online and offline environments. As part of this, enriched events definition and generation is supported from online environments for use in offline environments that encourage event data parity and support historical data replay for offline point-in-time feature simulation for complex event processing.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of a digital medium environment in an example implementation that is operable to employ feature engineering logic generation and simulation techniques described herein.
FIG. 2 depicts an example implementation showing operation of a feature engineering module, feature engineering user interface, and logic generation module of FIG. 1 in greater detail.
FIG. 3 depicts an example implementation showing event data generation as part of an online operational environment as supporting simulation of operation of the executable service platform in an offline simulation environment.
FIG. 4 depicts an example implementation of feature engineering and simulation of operation of digital services within an online operational environment using the event data of FIG. 3.
FIG 5 is a flow diagram depicting a procedure in an example implementation of feature engineering logic generation and simulation.
FIG. 6 illustrates an example system including various components of an example device that can be implemented as any type of computing device as described and/or utilize with reference to FIGS. 1-5 to implement embodiments of the techniques described herein.

### DETAILED DESCRIPTION

### Overview

Complex event processing is used as part of machine learning to track events and arrive at a corresponding conclusion. Use of complex event processing is generally implemented in processing real-time events and extracting information based on the events from streams of information. In real world scenarios, for instance, complex event processing is usable in conjunction with machine learning to identify the events in real time in support of a timely response to the events. This is usable in support of a variety of functionality, such as to identify attacks by malicious parties, opportunities, recommendation engines, occurrence of a complex event defined over time from a cascading series of events, and so forth.

However, the real time nature of complex event processing as implemented in practice causes these techniques to fail in support of offline usage scenarios. This is due to use of variable definitions and lack of unification of computational logic for online and offline environments. This is also due to an inability to perform point-in-time feature simulation in an offline environment, e.g., due to inability to address a cascading series of events that together identify occurrence of the complex event. Rather, conventional techniques involve accumulating results over time and lack a backfill capability to shorten data maturity time.

Accordingly, feature engineering logic generation and simulation techniques are described. These techniques support automated logic generation (e.g., as part of a domain specific language) to define cascading-based complex event processing variables as part of feature engineering that support unified implementation across online and offline environments. As part of this, enriched events definition and generation techniques are supported from online environments for use in offline environments that encourage event data parity and support historical data replay for offline point-in-time feature simulation for complex event processing.

In one example, a feature engineering user interface is output at a computing device. The user interface includes functionality usable to receive an input selecting a trigger event, e.g., a user input specifying a particular event that is to function as a root of a complex event. The user interface, for instance, defines an event as "click_by_user." The user interface also includes functionality to add one or more enriched events as associated with the trigger event. The enriched events expand a definition of the trigger event and provide a context to occurrence of the trigger event, e.g., to specify "itemId," "siteId," "title," "price," and "eventTimeStamp" and may collect this data as a series of events over time.

Logic is then generated automatically and without user intervention that, upon detection of the trigger event, causes generation of data describing the enriched events to be gathered to form, collectively, event data. Trigger data that identifies the trigger event, enriched event, and the logic are then implemented by the service provider system.

Upon execution of the logic by an executable service platform of the service provider system, an event processing module monitors execution of one or more digital services, e.g., to provide search results, recommendations, control operation and allocation of computing device resources, and so forth. Upon detection of the trigger event, an online operation environment proceeds with executing the trigger event in support of the digital services, thereby maintaining operational functionality of the service provider system.

An event processing module also generates event data based on the logic of trigger data as describing corresponding values of the trigger event and one or more enriched events. The event data, for instance, is usable to collect data describing values of the trigger event and the enriched event over time, e.g., as a cascading series of events that together is usable to identify occurrence of the complex event.

The event data is passed from the online operation environment to an offline simulation environment. The offline simulation environment is then configured to use the event data as part of execution of the machine-learning model to simulate execution of the digital services as part of the online environment. In this way, simulation does not interfere with the online operational environment, thereby preserving operational efficiency. Further, the simulation is performable to support feature engineering using the event data as "near-real-time" as part of complex event processing through rich definition of the complex event and enriched event made possible by the logic. Further discussion of these and other examples is included in the following discussion and shown in corresponding figures.

In the following discussion, an example environment is described that employs the techniques described herein. Example procedures are also described that are performable in the example environment as well as other environments. Consequently, performance of the example procedures is not limited to the example environment and the example environment is not limited to performance of the example procedures.

### Feature Engineering Losic Generation and Simulation

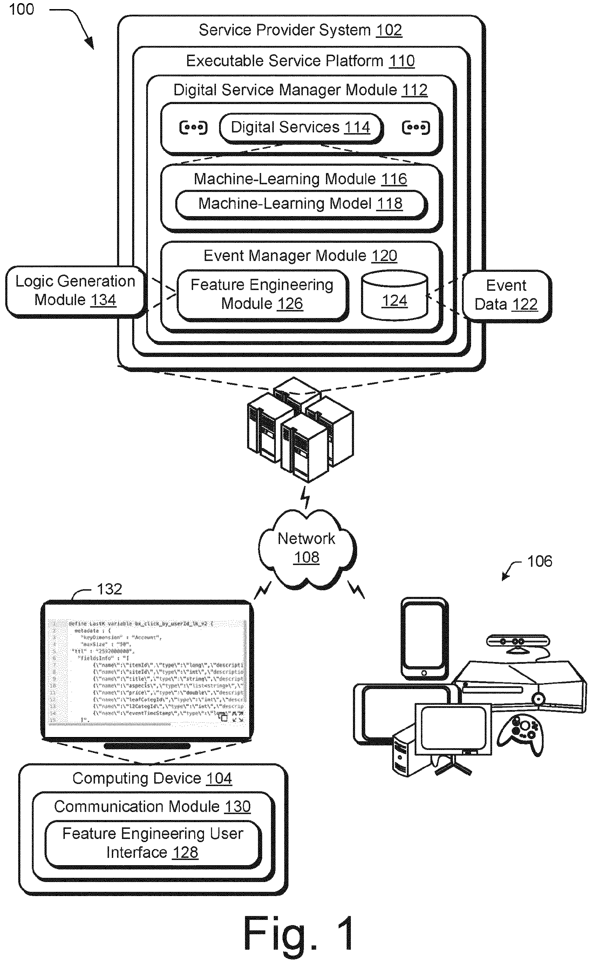

FIG. 1 is an illustration of a digital medium environment 100 in an example implementation that is operable to employ feature engineering logic generation and simulation techniques described herein. The illustrated environment 100 includes a service provider system 102, a computing device, 104, and a plurality of client devices 106 that are communicatively coupled, one to another, via a network 108. Computing devices that implement the service provider system 102, computing device 104, and client devices 106 are configurable in a variety of ways.

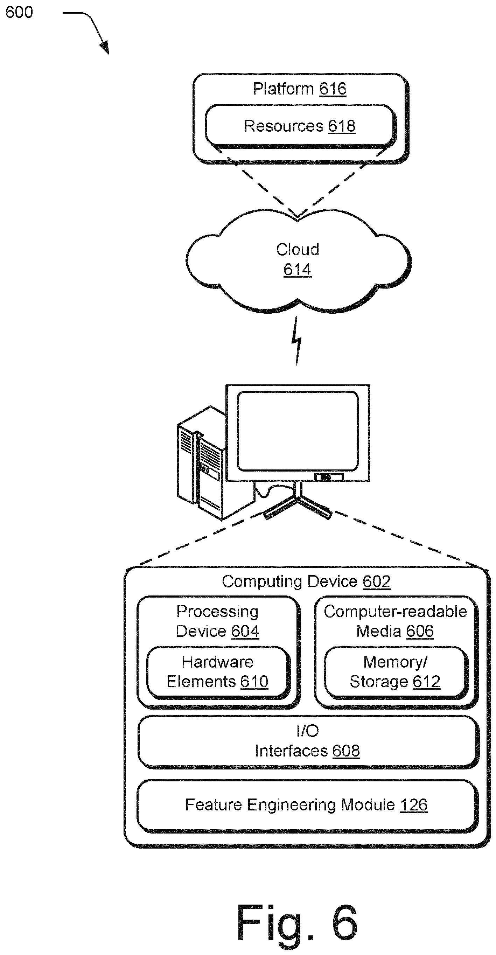

A computing device, for instance, is configurable as a desktop computer, a laptop computer, a mobile device (e.g., assuming a handheld configuration such as a tablet or mobile phone), and so forth. Thus, a computing device ranges from full resource devices with substantial memory and processor resources (e.g., personal computers, game consoles) to a low-resource device with limited memory and/or processing resources (e.g., mobile devices). Additionally, a computing device is also representative of a plurality of different devices, such as multiple servers utilized by a business to perform operations "over the cloud" as illustrated for the service provider system 102 and as described in FIG. 6.

The service provider system 102 includes an executable service platform 110. The executable service platform 110 includes a digital service manager module 112 that is configured to implement and manage access to digital services 114 "in the cloud" that are accessible by the client devices 106 via the network 108. Thus, the executable service platform 110 provides an underlying infrastructure to manage execution of digital services, e.g., through control of underly computational resources.

The executable service platform 110 supports numerous computational and technical advantages, including an ability of the service provider system 102 to readily scale resources to address wants of an entity associated with the client devices 106. Thus, instead of incurring an expense of purchasing and maintaining proprietary computer equipment for performing certain computational tasks, cloud computing provides the client devices 106 with access to a wide range of hardware and software resources so long as the client has access to the network 108.

Digital services 114 can take a variety of forms. Examples of digital services include social media services, document management services, storage services, media streaming services, content creation services, productivity services, digital marketplace services, auction services, and so forth. In some instances, the digital services 114 are implemented at least partially by a machine-learning module 116 that employs a machine-learning model 118. The machine-learning module 116 is representative of functionality to train, retrain, and use the machine-learning model 118 in support of implementing an operation, e.g., for a search, generating a recommendation as part of a recommendation engine, and so forth.

As previously described, a machine-learning model 118 refers to a computer representation that can be tuned (e.g., trained and retrained) based on inputs to approximate unknown functions. The machine-learning model 118 is configurable to utilize algorithms to learn from, and make predictions on, known data by analyzing training data to learn and relearn to generate outputs that reflect patterns and attributes of the training data. Examples of machine-learning models include neural networks (e.g., deep learning neural networks), convolutional neural networks (CNNs), long short-term memory (LSTM) neural networks, decision trees, and so forth.

Execution of the digital services 114 by the executable service platform 110 includes generation, detection, and management of events. These events are usable by the machine-learning model 118 to control output of corresponding actions, e.g., to cause execution of operations based on identification of an occurrence of an event by the machine-learning model 118. As part of this, an event manager module 120 is employed by the executable service platform 110 to generate and manage event data 122, which is illustrated as stored in a storage device 124. The event data 122 describes execution of the digital services 114 in this example as well as values of events that occur during this execution.

In a search and recommendation example, for instance, the machine-learning model 118 is employed by a digital service 114 to generate recommendations of items of digital content. The recommendations are configurable in a manner similar to performing a search based on a search query to locate the items of digital content. The search is implemented in this example by the machine-learning model 118 through use of event data 122 to learn patterns, automatically and without user intervention, expressed in the data to guide generation of a search result (i.e., the recommendation) of a particular item of digital content. Use of the search result as a recommendation supports a variety of usage scenarios, including digital audio recommendations, digital video recommendations, auction items, and so forth.

In order to improve accuracy, computational efficiency, and reduce power consumption the event manager module 120 also includes a feature engineering module 126. The feature engineering module 126 is configured to extract events as "features" that are usable to improve efficiency and accuracy in the training, retraining, and use of the machine-learning model 118. An example of this is complex event processing which is usable to detect complex event patterns in data that are usable to train and use the machine-learning model 118. A complex event pattern, for instance, may involve a cascading series of events that together identify occurrence of the complex event, e.g., audio data capturing a sound of raindrops hitting a roof that together indicate it is raining.

The feature engineering module 126 is configured to generate a feature engineering user interface 128, which is illustrated as accessed by the computing device 104 via the network 108 using a communication module 130, e.g., a browser, a network-enabled application, and so forth. The feature engineering user interface 128, as displayed by a display device 132, is configured to receive inputs to specify features for processing by the machine-learning module 116.

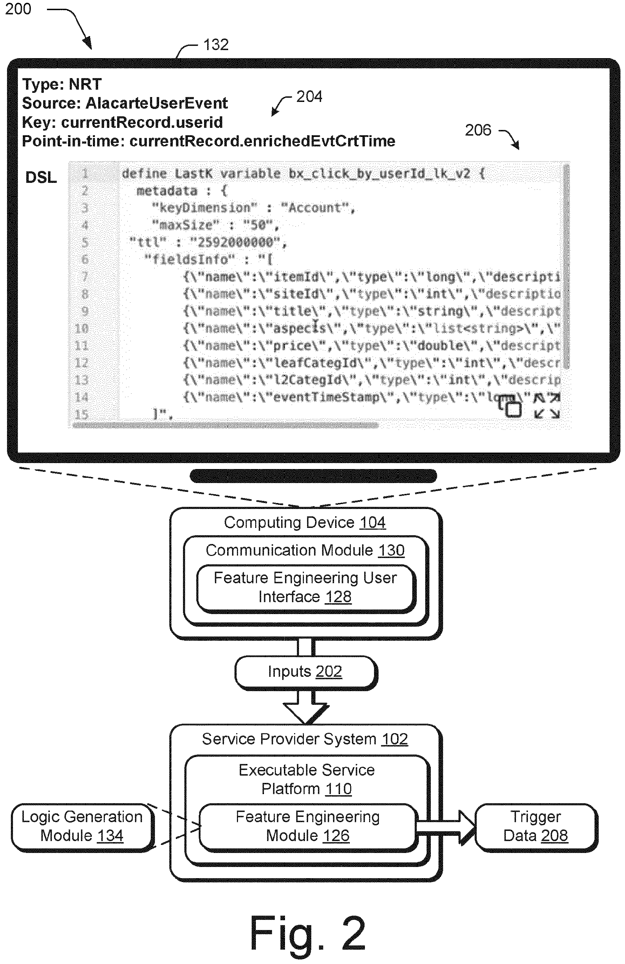

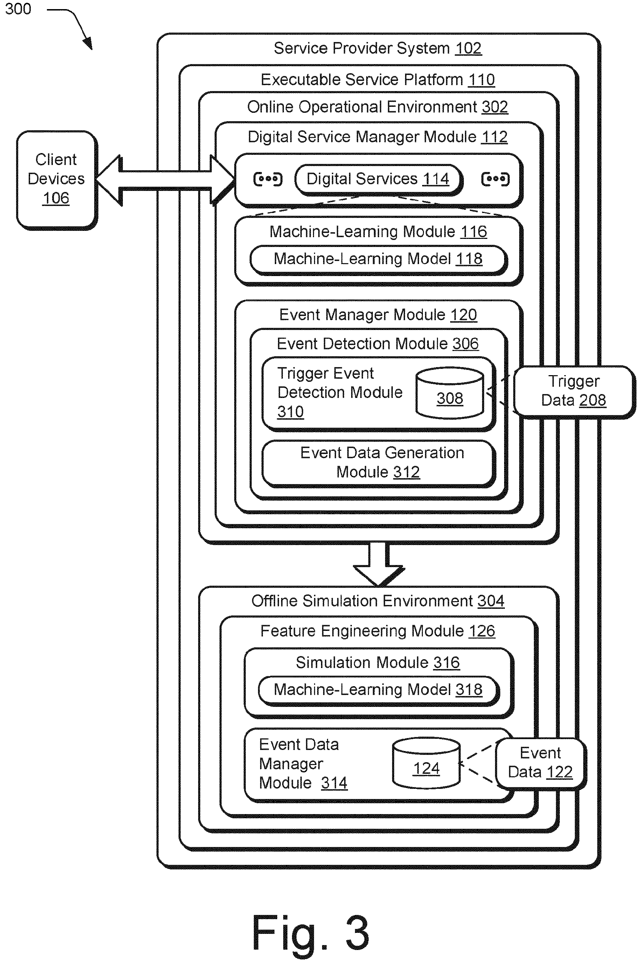

These inputs are then usable as part of feature engineering to support automated logic generation (e.g., as part of a domain specific language) by a logic generation module 134 of the feature engineering module 126, automatically and without user intervention. The logic is configurable to define cascading-based complex event processing variables as further described in relation to FIG 2. Use of the logic, as part of feature engineering, also supports unified implementation across online and offline environments as further described in relation to FIG. 3.

In general, functionality, features, and concepts described in relation to the examples above and below are employed in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are applicable together and/or combinable in different ways. Thus, individual functionality, features, and concepts described in relation to different example environments, devices, components, figures, and procedures herein are usable in any suitable combinations and are not limited to the particular combinations represented by the enumerated examples in this description.

FIG. 2 depicts an example implementation 200 showing operation of a feature engineering module 126, feature engineering user interface 128, and logic generation module 134 of FIG. 1 in greater detail. The feature engineering user interface 128 is illustrated as displayed by the display device 132. The feature engineering user interface 128 is configured to receive inputs 202 that are used to support feature engineering, e.g., by a data scientist for subsequent simulation of operation of the executable service platform 110.

The user interface includes an option 204 configured to specify a trigger event as a variable (e.g., "Key: currentRecord.userid") to be detected during monitoring of data describing execution of digital services 114 by the executable service platform 110. Options are also illustrated to specify a source (e.g., "AlacarteUserEvent") of the event and a point-in-time associated with the trigger event (e.g., "currentRecord.enrichedEvtCrtTime"). A schema 206 is also specified via the inputs 202 as defining enriched events to be captured responsive to detection of the trigger event, e.g., "itemId," "sideId," "title," "asects," "price," "leafCategId," L2CategId," and "eventTimeStamp."

The inputs 202, upon receipt by the feature engineering module 126, are then used as a basis by a logic generation module 134 to generate trigger data 208 having logic that specifies how the enriched events are to be captured responsive to detection of the trigger event. The logic, for instance, is configured to define complex event patterns. A complex event pattern, for instance, may involve a cascading series of events that together identify occurrence of the complex event as described above.

By doing so, event data generated as a result of execution of the logic of the trigger data 208 is usable to ensure parity between the event data and data observed during execution of the digital services 114. In this way, accuracy of a simulation of operational conditions using this data is supported, which is not possible in conventional techniques. Further, these techniques performance of the simulation offline, instead of implementation as part of a "reading pass" during operation of an online operational environment, thereby promoting computational efficiency and reducing lag as further described in the following example.

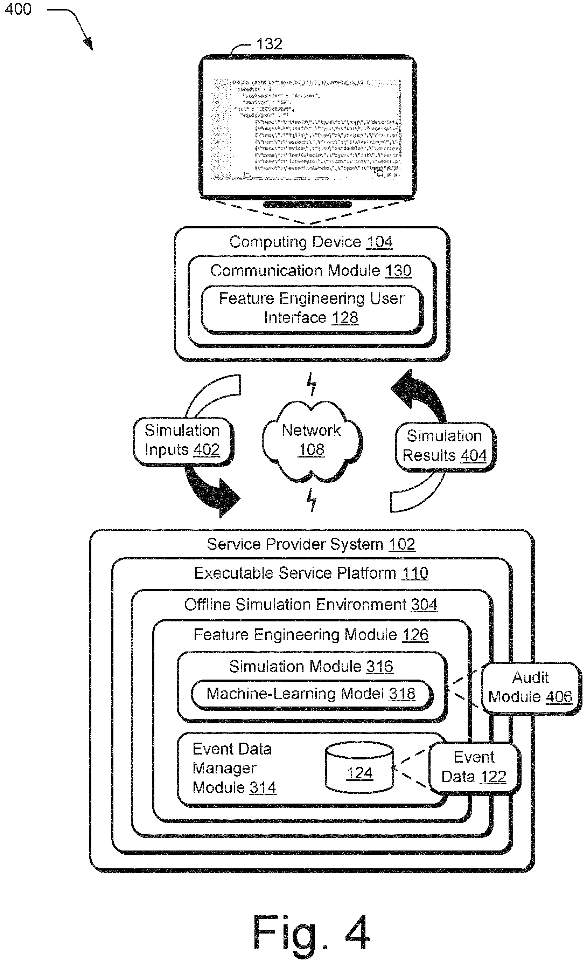

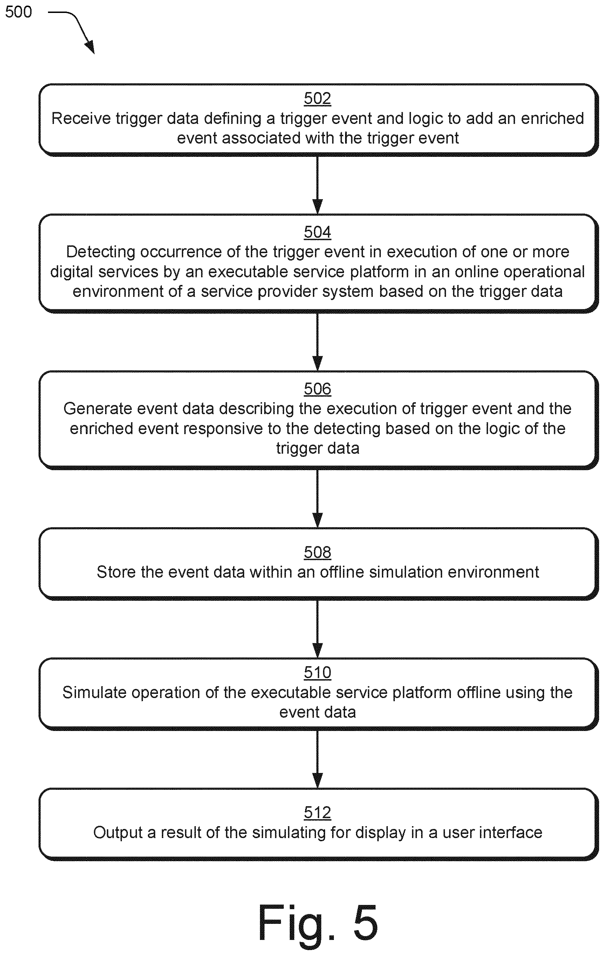

FIG. 3 depicts an example implementation 300 showing event data generation as part of an online operational environment 302 as supporting simulation of operation of the executable service platform in an offline simulation environment 304. FIG. 4 depicts an example implementation 400 showing an example of feature engineering and simulation of operation of digital services 114 within the online operational environment 302 using the event data of FIG. 3. FIG. 5 depicts a procedure 500 in an example implementation of feature engineering logic generation and simulation.

The following discussion describes techniques that are implementable utilizing the previously described systems and devices. Aspects of each of the procedures are implemented in hardware, firmware, software, or a combination thereof. The procedures are shown as a set of blocks that specify operations performed by one or more devices and are not necessarily limited to the orders shown for performing the operations by the respective blocks. In portions of the following discussion, reference is made in parallel to FIGS. 3-5.

With reference to FIG. 3, the online operational environment 302 is implemented to support operation of the digital services 114 in real time for access by the client devices 106. In the illustrated example, the machine-learning model 118 is configured to support implementations of the digital services 114, e.g., for search, recommendation generation as part of a recommendation engine, and so forth. Examples of digital services 114 as previously described include social media services, document management services, storage services, media streaming services, content creation services, productivity services, digital marketplace services, auction services, and so forth. Accordingly, computational efficiency is a primary consideration in provisioning of computational resources in support of these services as part of the online operational environment 302.

However, data desired by data scientists as part of feature engineering in support of operation of the digital services 114 desire increased richness (i.e., a larger record size), which can have an adverse effect on performance. To address this challenge in this example, this increased richness is supported through use of the offline simulation environment 304 using event data 122 having parity with data as used as part of implementing the digital services 114.

The online operational environment 302, for instance, is configured to execute the digital services 114 and corresponding machine-learning model 118 to support the functionality described above. An event detection module 306 is configured to generate event data describing interaction with and execution of the digital services 114. To do so, the event detection module 306 receives trigger data 208 defining a trigger event and logic to add an enriched event associated with the trigger event (block 502), which is illustrated as stored in a storage device 308.

During execution of the digital services 114 by the online operational environment 302, a trigger event detection module 310 is configured to detect occurrence of the trigger event in execution of one or more digital services by the executable service platform 110 in an online operational environment of a service provider system based on the trigger data (block 504). The trigger event, for instance, is detectable to locate a variable as defined in FIG. 2 as the trigger event.

In response to detection of the trigger event by the trigger event detection module 310, an event data generation module 312 is employed to generate event data 122 based on the logic of the trigger data 208 (block 506). The event data generation module 312, for instance, executes the logic to locate expanded events defined by the trigger data 208. This is usable, for instance, to define a complex event pattern, for instance, that involves a cascading series of events. The event data generation module 312 therefore collects data describing the cascading series of events.

The event data generated by the event data generation module 312 is communicated to an event data manager module 314 for storage in a storage device 124 associated with an offline simulation environment 304 (block 508). A simulation module 316 is then employed to simulate operation of the executable service platform 110 offline using the event data 122 (block 510), e.g., using a machine-learning model 318 that is trained using the event data 122. A result of the simulation is then output by the feature engineering module 126 for display in a user interface (block 512) which supports feature engineering as further described in the example and shown in a corresponding figure.

FIG. 4 depicts an example implementation 400 showing an example of feature engineering and simulation of operation of digital services 114 within the online operational environment 302 using the event data of FIG. 3. The event data 122 is usable by a simulation module 316 to simulate operation of the executable service platform 110 using the machine-learning model 318.

Simulation inputs 402, for instance, are configurable to define variables as corresponding to the events described in the event data 122. The simulation module 316 then employs the machine-learning model 318 to simulation operation of the digital services 114 and the executable service platform 110, a result of which is output as simulation results 404. This is performable to support a variety of functionalities, such as to support search, recommendations engines, user segmentation, and so on. The simulation, through use of the event data 122, is configured to support an offline point-in-time feature simulation that is not possible in conventional techniques.

User segmentation, for instance, involves a process of separating users into distinct segments based on shared characteristics that are definable based on the events. Accordingly, feature engineering supported by the feature engineering module 126 is usable to adjust features and determine a result on segmentation and respective desired outcomes, such as to select a particular item of digital content, examples of which include a recommendation of a digital image, digital movie, digital media, digital product listing in support of an auction, and so forth.

The simulation module 316 also includes an audit module 406. The audit module 406 is configured to determine a level of matching of an output of the online operational environment with an output of the simulation. This is usable to determine accuracy of the event data 122 as well as accuracy in the simulation by the machine-learning model 318. This determination, for instance, is usable to automatically cease a simulation upon detection that the level of matching has exceeded a threshold and thus is no longer accurate. Output of the simulation results 404 is configurable to indicate the level of the match.

As described above, these techniques support definition of a trigger event and logic for inclusion of corresponding enriched events. As part of this, the logic generation module 134 is configured to automatically validate the logic and enable optimized processing for execution by the feature engineering module 126. This is usable to support cascading scenarios in which next level processing is triggered based on a result of a current feature state. Although sizes of intermediate stored variable and variable states may be large (e.g., over 16 KB), a final stored variable as event data 122 resulting from the trigger data 208 is relatively compact and thus improves memory and processing efficiency.

### Example System and Device

FIG. 6 illustrates an example system 600 that includes an example computing device 602 that is representative of one or more computing systems and/or devices that implement the various techniques described herein. This is illustrated through inclusion of the feature engineering module 126. The computing device 602 is configurable, for example, as a server of a service provider, a device associated with a client (e.g., a client device), an on-chip system, and/or any other suitable computing device or computing system.

The example computing device 602 as illustrated includes a processing device 604, one or more computer-readable media 606, and one or more input/output (I/O) interfaces 608 that are communicatively coupled, one to another. Although not shown, the computing device 602 further includes a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing device 604 is representative of functionality to perform one or more operations using hardware. Accordingly, the processing device 604 is illustrated as including hardware element 610 that is configurable as processors, functional blocks, and so forth. This includes implementation in hardware as an application specific integrated circuit or other logic device formed using one or more semiconductors. The hardware elements 610 are not limited by the materials from which they are formed or the processing mechanisms employed therein. For example, processors are configurable as semiconductor(s) and/or transistors (e.g., electronic integrated circuits (ICs)). In such a context, processor-executable instructions are electronically executable instructions.

The computer-readable storage media 606 is illustrated as including memory/storage 612 that stores instructions that are executable to cause the processing device 604 to perform operations. The memory/storage 612 represents memory/storage capacity associated with one or more computer-readable media. The memory/storage 612 includes volatile media (such as random access memory (RAM)) and/or nonvolatile media (such as read only memory (ROM), Flash memory, optical disks, magnetic disks, and so forth). The memory/storage 612 includes fixed media (e.g., RAM, ROM, a fixed hard drive, and so on) as well as removable media (e.g., Flash memory, a removable hard drive, an optical disc, and so forth). The computer-readable media 606 is configurable in a variety of other ways as further described below.

Input/output interface(s) 608 are representative of functionality to allow a user to enter commands and information to computing device 602, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., employing visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 602 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques are configurable on a variety of commercial computing platforms having a variety of processors.

An implementation of the described modules and techniques is stored on or transmitted across some form of computer-readable media. The computer-readable media includes a variety of media that is accessed by the computing device 602. By way of example, and not limitation, computer-readable media includes "computer-readable storage media" and "computer-readable signal media."

"Computer-readable storage media" refers to media and/or devices that enable persistent and/or non-transitory storage of information (e.g., instructions are stored thereon that are executable by a processing device) in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include but are not limited to RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and are accessible by a computer.

"Computer-readable signal media" refers to a signal-bearing medium that is configured to transmit instructions to the hardware of the computing device 602, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 610 and computer-readable media 606 are representative of modules, programmable device logic and/or fixed device logic implemented in a hardware form that are employed in some embodiments to implement at least some aspects of the techniques described herein, such as to perform one or more instructions. Hardware includes components of an integrated circuit or on-chip system, an application-specific integrated circuit (ASIC), a field-programmable gate array (FPGA), a complex programmable logic device (CPLD), and other implementations in silicon or other hardware. In this context, hardware operates as a processing device that performs program tasks defined by instructions and/or logic embodied by the hardware as well as a hardware utilized to store instructions for execution, e.g., the computer-readable storage media described previously.

Combinations of the foregoing are also be employed to implement various techniques described herein. Accordingly, software, hardware, or executable modules are implemented as one or more instructions and/or logic embodied on some form of computer-readable storage media and/or by one or more hardware elements 610. The computing device 602 is configured to implement particular instructions and/or functions corresponding to the software and/or hardware modules. Accordingly, implementation of a module that is executable by the computing device 602 as software is achieved at least partially in hardware, e.g., through use of computer-readable storage media and/or hardware elements 610 of the processing device 604. The instructions and/or functions are executable/operable by one or more articles of manufacture (for example, one or more computing devices 602 and/or processing devices 604) to implement techniques, modules, and examples described herein.

The techniques described herein are supported by various configurations of the computing device 602 and are not limited to the specific examples of the techniques described herein. This functionality is also implementable all or in part through use of a distributed system, such as over a "cloud" 614 via a platform 616 as described below.

The cloud 614 includes and/or is representative of a platform 616 for resources 618. The platform 616 abstracts underlying functionality of hardware (e.g., servers) and software resources of the cloud 614. The resources 618 include applications and/or data that can be utilized while computer processing is executed on servers that are remote from the computing device 602. Resources 618 can also include services provided over the Internet and/or through a subscriber network, such as a cellular or Wi-Fi network.

The platform 616 abstracts resources and functions to connect the computing device 602 with other computing devices. The platform 616 also serves to abstract scaling of resources to provide a corresponding level of scale to encountered demand for the resources 618 that are implemented via the platform 616. Accordingly, in an interconnected device embodiment, implementation of functionality described herein is distributable throughout the system 600. For example, the functionality is implementable in part on the computing device 602 as well as via the platform 616 that abstracts the functionality of the cloud 614.

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method comprising:
receiving trigger data defining a trigger event and logic to add an enriched event associated with the trigger event;
detecting occurrence of the trigger event in execution of one or more digital services by an executable service platform in an online operational environment of a service provider system based on the trigger data;
generating event data describing the execution of the trigger event and the enriched event responsive to the detecting based on the logic of the trigger data;
storing the event data within an offline simulation environment;
simulating operation of the executable service platform offline using the event data; and
outputting a result of the simulating for display in a user interface.

2. The method as described in claim 1, wherein the simulating includes training and retraining a machine learning model using the event data as training data;
wherein the simulating may be configured as an offline point-in-time feature simulation.

3. The method as described in claim 1 or 2, wherein the logic of the trigger data defines a cascading logic definition of the trigger event with respect to the enriched event; wherein the trigger data may be configured as a domain specific language.

4. The method as described in any one of the preceding claims, further comprising detecting occurrence of the enriched event responsive to the detecting the occurrence of the trigger event based on the logic of the trigger data.

5. The method as described in any one of the preceding claims, further comprising monitoring execution of the one or more digital services by the executable service platform and wherein the detected is based on the monitoring.

6. The method as described in any one of the preceding claims, further comprising determining a level of matching of an output of the online operational environment with an output of the simulating and wherein the outputting indicates the level of matching.

7. The method as described in any one of the preceding claims, wherein the logic is generated based on an input via a user interface to expand a definition of the trigger event;
wherein the logic may be generated automatically and without user intervention responsive to receipt of the input via the user interface.

8. A computing device comprising:
a processing device; and
a computer-readable storage medium storing instructions that, responsive to execution by the processing device, causes the processing device to perform operations including:
receiving an input via a user interface defining a trigger event and an enriched event associated with the trigger event;
generating logic, automatically and without user intervention responsive to the input, to add the enriched event as part of the trigger event in trigger data;
executing the logic of the trigger data in an online execution environment to generate event data, the event data describing execution of the trigger event and execution of the enriched event as part of operation of one or more digital services; and
storing the event data in an offline simulation environment in support of simulating operation of the online execution environment.

9. The computing device as described in claim 8, wherein the operations further comprise simulating the operation of the online execution environment.

10. The computing device as described in claim 9, the operations further comprising determining a level of matching of an output of the online operational environment with an output of the simulating.

11. The computing device as described in any one of claims 8 to 10, wherein the simulating includes training and retraining a machine learning model using the event data as training data;
wherein the simulating may implement an offline point-in-time feature simulation.

12. The computing device as described in any one of claims 8 to 11, wherein the logic of the trigger data defines a cascading logic definition of the trigger event with respect to the enriched event.

13. The computing device as described in any one of claims 8 to 12, wherein the operations further comprise detecting occurrence of the trigger event responsive to the executing of the logic and the generating is performed responsive to the detecting;
wherein the operations may further comprise detecting occurrence of the enriched event responsive to the detecting the occurrence of the trigger event based on the executing of logic of the trigger data.

14. One or more computer-readable storage media storing instructions that, responsive to execution by a processing device, causes the processing device to perform operations including:
receiving trigger data defining a trigger event and logic to add an enriched event associated with the trigger event;
detecting occurrence of the trigger event in execution of one or more digital services by an executable service platform in an online operational environment of a service provider system based on the trigger data;
generating event data describing the execution of the trigger event and the enriched event responsive to the detecting based on the logic of the trigger data; and
executing a machine learning model, the executing simulating operation of the executable service platform offline using the event data.

15. The one or more computer readable storage media as described in claim 14, wherein the logic of the trigger data defines a cascading logic definition of the trigger event with respect to the enriched event.
